# EUROPEAN PATENT APPLICATION

(11) **EP 4 552 962 A1**
(43) Date of publication of application: **14.05.2025**
(21) Application number: 23856030.4
(22) Date of filing: 13.03.2023
(51) Int. Cl.: B62M 6/45, B62M 6/50, B62M 6/55

(54) **POWER DEVICE, CONTROL METHOD, CONTROL DEVICE, AND ELECTRIC BICYCLE**

(30) Priority: 22.08.2022 CN 202211005057
(71) Applicant: Guangdong Welling Motor Manufacturing Co., Ltd., Foshan, Guangdong 528311 (CN)
(72) Inventor: HE, Xiao, Foshan, Guangdong 528311 (CN); FAN, Qingquan, Foshan, Guangdong 528311 (CN); LIU, Hailiang, Foshan, Guangdong 528311 (CN); WANG, Hongxiao, Foshan, Guangdong 528311 (CN)
(74) Representative: Ran, Handong
(86) International application number: PCT/CN2023/081109
(87) International publication number: WO 2024/040933

(57) **Abstract**

The present application discloses a power device, a control method, a control device, and an electric bicycle. The power device comprises a crankshaft (100), a motor (200), a first one-way clutch (300), a second one-way clutch (400), a power output part (500), a first sensor (700), a second sensor (210) and a controller (800). The power output part (500) is connected to the crankshaft (100) by means of the first one-way clutch (300); an input end of a transmission assembly (600) is connected to a drive shaft of the motor (200), and an output end of the transmission assembly (600) is connected to the power output part (500) by means of the second one-way clutch (400). The controller (800) controls the output torque of the motor (200) according to the torque acquired by the first sensor (700) and the rotational speed acquired by the second sensor (210).

## Description

### CROSS-REFERENCE TO RELATED APPLICATION

This application claims priority to Chinese patent application No. 202211005057.1 filed August 22, 2022, and entitled "POWER DEVICE, CONTROL METHOD, CONTROL DEVICE, AND ELECTRIC BICYCLE", the entire contents of which are incorporated herein by reference.

### TECHNICAL FIELD

The present application relates to the technical field of motors, and in particular, to a power device, a control method for a power device, a control device, and an electric bicycle.

### BACKGROUND

In the related art, the improper control of intervention and disengagement of motor power in electric bicycles is likely to cause phenomena such as insufficient power, power delay, intervention impact, disengagement impact, high motor resistance during zero assistance, leading to undesirable mileage performance, unsatisfactory riding experience, or even a safety accident.

### SUMMARY

The present application aims to at least solve one of the technical problems in the related art. To this end, the present application provides a power device.

Embodiments of the present application further provide a control method for a power device, a control device, and an electric bicycle.

In accordance with a first aspect of the present application, an embodiment provides a power device, including: a crankshaft, a motor, a first one-way clutch, a second one-way clutch, a power output part, a transmission assembly, a first sensor, a second sensor, and a controller, where the power output part is connected to the crankshaft by the first one-way clutch; an input end of the transmission assembly is connected to a drive shaft of the motor, and an output end of the transmission assembly is connected to the power output part by the second one-way clutch; the first sensor is configured to detect a torque of the crankshaft; the second sensor is configured to detect a rotational speed of the motor; the controller is configured to control an output torque of the motor according to signals detected by the first sensor and the second sensor.

According to some embodiments of the present application, the controller is configured to: acquire a preset power assist ratio, and calculate a target torque of the motor according to the power assist ratio and the torque acquired by the first sensor; and adjust the output torque to the target torque according to the rotational speed acquired by the second sensor, where the power assist ratio is a ratio of a torque of the motor to the torque of the crankshaft.

According to some embodiments of the present application, the first one-way clutch includes a first inner ring, a first clutch assembly, and a first outer ring, the first outer ring is fixedly connected to the crankshaft, the first clutch assembly is located between the first inner ring and the first outer ring, the first sensor includes a torque sensing kit and a torque detection member, the first inner ring is connected to the power output part by the torque sensing kit, and the torque detection member is fixedly provided.

According to some embodiments of the present application, the second one-way clutch includes a second inner ring, a second clutch assembly and a second outer ring, the second outer ring is connected to the output end, the second inner ring is connected to the power output part, and the second clutch assembly is located between the second outer ring and the second inner ring.

According to some embodiments of the present application, the second sensor is an angular velocity sensor configured to detect the rotational speed of the motor.

According to some embodiments of the present application, the transmission assembly is a two-stage reduction gear set or a three-stage reduction gear set.

In accordance with a second aspect of the present application, an embodiment provides a control method for a power device, where the power device includes a crankshaft, a motor, a first one-way clutch, a second one-way clutch, a power output part, a transmission assembly, a first sensor, and a second sensor; the power output part is connected to the crankshaft by the first one-way clutch; an input end of the transmission assembly is connected to a drive shaft of the motor, and an output end of the transmission assembly is connected to the power output part by the second one-way clutch; the first sensor is configured to detect a torque of the crankshaft; the second sensor is configured to detect a rotational speed of the motor; the control method includes:

controlling an output torque of the motor according to signals detected by the first sensor and the second sensor in response to the power device being in a power assist mode.

According to some embodiments of the present application, controlling an output torque of the motor according to signals detected by the first sensor and the second sensor includes:
acquiring a preset power assist ratio, and calculating a target torque of the motor according to the power assist ratio and a torque signal acquired by the first sensor, where the power assist ratio is a ratio of a torque of the motor to the torque of the crankshaft; and
adjusting the output torque of the motor to the target torque based on a rotational speed signal acquired by the second sensor.

According to some embodiments of the present application, the power assist mode includes a plurality of working gear positions which are preset, each of the working gear positions corresponds to a different power assist ratio, and acquiring a preset power assist ratio includes:
acquiring a current working gear position, and determining the corresponding power assist ratio according to the current working gear, where a value range of the power assist ratio is 0.5 to 4.

According to some embodiments of the present application, the control method includes:
acquiring an operation instruction of a user;
switching a working mode of the power device according to the operation instruction, where the working mode includes a human-powered mode, a motor-powered mode, the power assist mode, and a shutdown or coast mode.

In accordance with a third aspect of the present application, an embodiment provides a control device, including: a memory, a processor, and a program stored in the memory and executable by the processor, where the program, when executed by the processor, causes the processor to implement the control method for a power device in accordance with the embodiment of the second aspect.

In accordance with a fourth aspect of the present application, an embodiment provides an electric bicycle, including the power device in accordance with the embodiment of the first aspect or the control device in accordance with the embodiment of the third aspect.

Additional features and advantages of the present application will be set forth in the description which follows, and in part will be obvious from the description, or may be learned by the practice of the present application.

### BRIEF DESCRIPTION OF DRAWINGS

The present application is further described below in conjunction with the accompanying drawings and embodiments. In the drawings:
FIG. 1 is a schematic structural sectional view of a power device according to an embodiment of the present application;
FIG. 2 is a schematic structural block diagram of a power device according to an embodiment of the present application;
FIG. 3 is a schematic structural block diagram of a power device in a first working mode according to an embodiment of the present application;
FIG. 4 is a schematic structural block diagram of a power device in a second working mode according to an embodiment of the present application;
FIG. 5 is a schematic structural block diagram of a power device in a third working mode according to an embodiment of the present application;
FIG. 6 is a flowchart of a control method for a power device according to an embodiment of the present application;
FIG. 7 is a flowchart of a control method for a power device according to another embodiment of the present application; and
FIG. 8 is a flowchart of a control method for a power device according to another embodiment of the present application.

### List of reference numerals:

crankshaft 100; housing 101; crank 110;
motor 200; second sensor 210; rotor assembly 220;
first one-way clutch 300; first inner ring 310; first outer ring 320;
second one-way clutch 400; second inner ring 410; second clutch assembly 420; second outer ring 430;
power output part 500;
transmission assembly 600; input shaft 601; input gear 602; first intermediate gear 603; primary driven gear 604; secondary driving gear 605; second intermediate gear 606; secondary driven gear 607; tertiary driving gear 608; output shaft 609; output gear 610;
first sensor 700; torque sensing kit 710; torque detection member 720;
controller 800; and
power device 1000.

### DETAILED DESCRIPTION

Embodiments of the present application will be described in detail below in conjunction with the accompanying drawings in which the same or like reference numerals refer to the same or like elements or elements having the same or like functions throughout. The embodiments described below with reference to the accompanying drawings are exemplary and are intended for illustration only, and are not to be construed as limiting the present application.

In the description of the present application, it should be understood that for the description of orientations, the orientation or positional relationships indicated by the terms such as "on", "below" and the like are based on orientation or positional relationships shown in the accompanying drawings, and are used only for ease and brevity of illustration and description, rather than indicating or implying that the mentioned apparatus or element must have a particular orientation or must be constructed and operated in a particular orientation. Therefore, such terms should not be construed as limiting of the present application.

In the description of the present application, the terms such as "first" and "second" used herein are merely used for distinguishing technical features, and are not intended to indicate or imply relative importance, or implicitly point out the number of the indicated technical features, or implicitly point out the order of the indicated technical features.

In the description of the present application, unless otherwise explicitly defined, the terms such as "configure", "install/mount" and "connect" should be understood in a broad sense, and those having ordinary skills in the art can reasonably determine the specific meanings of the above terms in the present application based on the specific contents of the technical scheme.

The technical schemes in the present application will be described clearly and fully with reference to the accompanying drawings. Apparently, the embodiments described are merely some embodiments, rather than all of the embodiments of the present application.

Electric bicycles are a new type of two-wheeled vehicle that can realize the integration of pedaling and motor assistance. The biggest difference between electric bicycles and conventional bicycles lies in intervention and disengagement of motor power.

Power devices are mainly classified by the installation position into two types: mid-drive motor and hub motor. The mid-drive motor is arranged in the middle of the bicycle. When no electric power is supplied to the mid-drive motor, a rider can ride the bicycle by pedaling, during which the resistance is the same as that of an ordinary bicycle. The hub motor is installed in a wheel hub of the bicycle. Compared with the hub motor, the mid-drive motor has greater advantages in technology, performance, etc.

In the related art, the improper control of intervention and disengagement of power from the mid-drive motor is likely to cause phenomena such as insufficient power, power delay, intervention impact, disengagement impact, high motor resistance during zero assistance, leading to undesirable mileage performance, unsatisfactory riding experience, or even a safety accident.

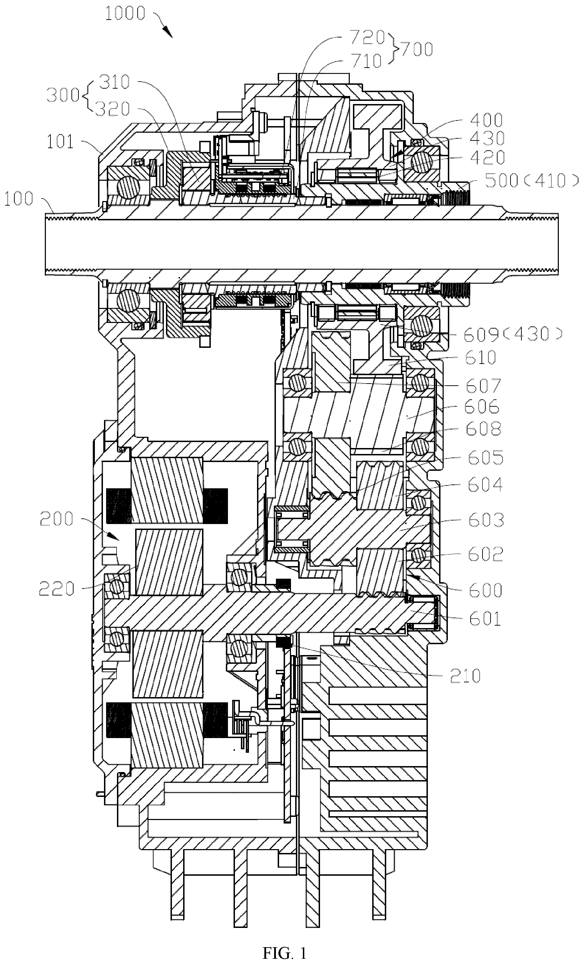

FIG. 1 to FIG. 5 show a power device 1000 according to an embodiment of the present application, which is applicable to an electric bicycle. For example, the power device 1000 is a mid-drive motor. The power device 1000 will be described below through examples.

Referring to FIG. 1, the power device 1000 according to the embodiment of the present application includes a housing 101, a crankshaft 100, a motor 200, a first one-way clutch 300, a second one-way clutch 400, and a power output part 500. The crankshaft 100 is rotatably connected to the housing 101. The crankshaft 100 runs through the housing 101 and is connected to cranks 110. The motor 200, the first one-way clutch 300, the second one-way clutch 400, and the power output part 500 are all arranged in the housing 101. The power device 1000 is fixed to a frame of an electric bicycle through the housing 101, to ensure the stability of the entire power device 1000.

Referring to FIG. 1, it can be understood that the power output part 500 is sleeved on an outer side of the crankshaft 100. The first one-way clutch 300 is arranged between the power output part 500 and the crankshaft 100, such that the power output part 500 is connected to the crankshaft 100 by the first one-way clutch 300. The crankshaft 100 is connected to pedals through the cranks 110 respectively. When a rider steps on the pedals, the pedals drive, through the cranks 110, the crankshaft 100 to rotate and cause the first one-way clutch 300 to work, and human power is transmitted to the power output part 500 through the crankshaft 100 and the first one-way clutch 300, to drive wheels to rotate.

Referring to FIG. 1, it can be understood that the motor 200 transmits power to the power output part 500 through the transmission assembly 600. An input end of the transmission assembly 600 is connected to a drive shaft of the motor 200, and an output end of the transmission assembly 600 is connected to the power output part 500 through the second one-way clutch 400. The transmission assembly 600 may be a gear reduction mechanism. The power of the motor 200 is transmitted to the gear reduction mechanism, and the second one-way clutch 400 works, thereby transmitting the power of the motor 200 to the wheels, and finally driving the wheels to rotate.

It should be noted that the first one-way clutch 300 and the second one-way clutch 400 both transmit power in one direction. The first one-way clutch 300 can realize unidirectional power transmission between the crankshaft 100 and the power output part 500, and the second one-way clutch 400 can realize unidirectional power transmission between the transmission assembly 600 and the power output part 500.

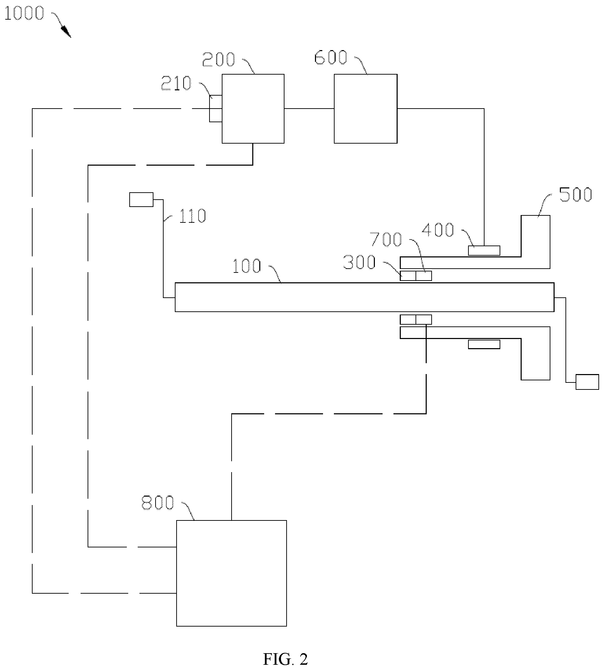

Referring to FIG. 1 and FIG. 2, it can be understood that when the crankshaft 100 rotates forward, the first one-way clutch 300 drives the power output part 500 to rotate forward; when the crankshaft 100 rotates reversely, the first one-way clutch 300 cannot drive the power output part 500 to rotate forward; and when the crankshaft 100 stops rotating, the power output part 500 can freely rotate forward under the action of an external force. When the transmission assembly 600 is driven to rotate forward, the second one-way clutch 400 drives the power output part 500 to rotate forward; when the transmission assembly 600 rotates reversely, the second one-way clutch 400 cannot drive the power output part 500 to rotate forward; and when the transmission assembly 600 stops rotating, the power output part 500 can freely rotate forward under the action of an external force.

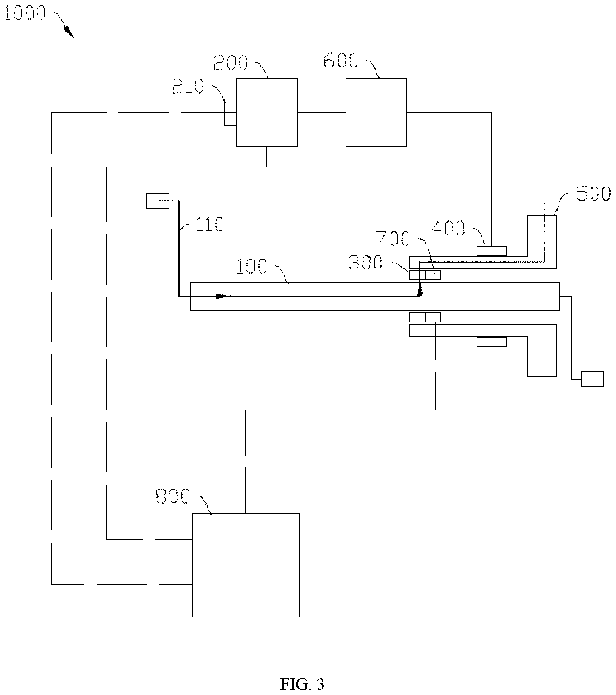

Referring to FIG. 3, it should be noted that the power device 1000 of the embodiment of the present application has four working modes, including a first working mode, a second working mode, a third working mode, and a fourth working mode. In the first working mode, the electric bicycle is driven by human power alone. The crankshaft 100 is driven to rotate forward by human power, the motor 200 does not provide power to the power output part 500, the crankshaft 100 can drive the first one-way clutch 300 to work, and the human power is transmitted to the power output part 500 through the first one-way clutch 300. In this case, the second one-way clutch 400 is idling, and the human power does not affect the motor 200 and the transmission assembly 600. In this way, the driving of the electric bicycle by human power is realized. When the rider stops pedaling or pedals reversely, the crankshaft 100 rotates reversely relative to the first one-way clutch 300, and the crankshaft 100 does not transmit power to the power output part 500. The direction of a power output route is denoted by arrows in FIG. 3.

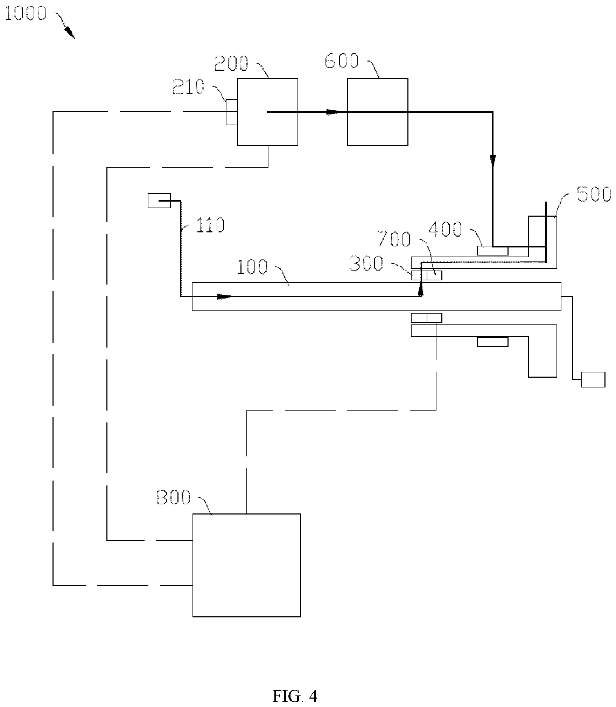

Referring to FIG. 4, in the second working mode, the electric bicycle is driven by human power and the motor 200. When the human power drives the crankshaft 100 to rotate forward, the motor 200 outputs power, the motor 200 rotates forward, and the first one-way clutch 300 and the second one-way clutch 400 are both in a working state. The human power is transmitted to the power output part 500 through the crankshaft 100 and the first one-way clutch 300 in sequence, and the power of the motor 200 is transmitted to the power output part 500 through the transmission assembly 600 and the second one-way clutch 400 in sequence. In this way, the driving of the electric bicycle by human power and the motor 200 is realized. The second working mode is also referred to as a power assist mode. The directions of power output routes are indicated by arrows in FIG. 4.

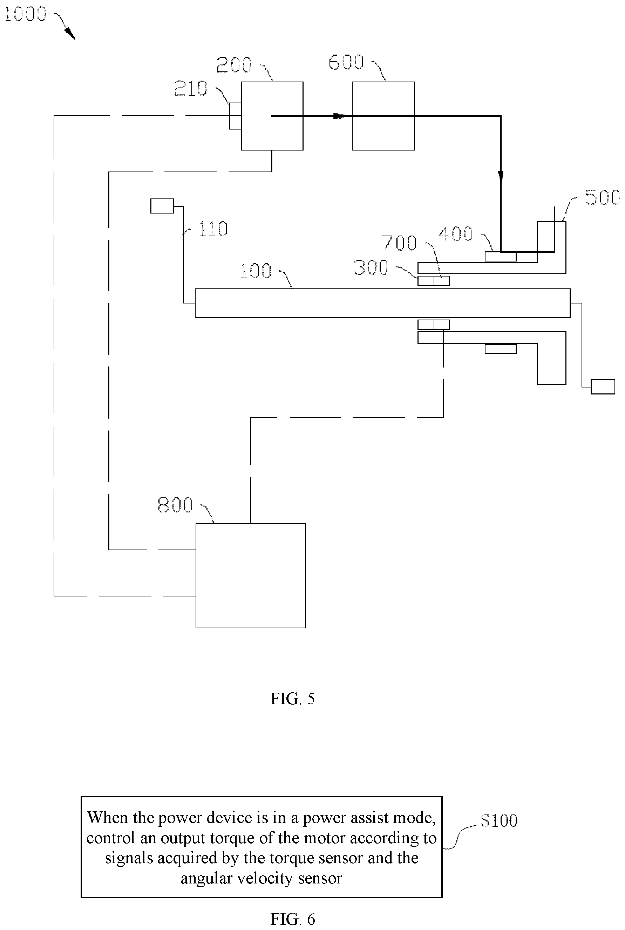

Referring to FIG. 5, in the third working mode, the electric bicycle is driven by the motor 200 alone. The motor 200 rotates forward to output power, and the rider is not pedaling. In this case, the power of the motor 200 is transmitted to the power output part 500 through the transmission assembly 600 and the second one-way clutch 400, the first one-way clutch 300 is idling, and the motor 200 does not affect the crankshaft 100. In this way, the driving of the electric bicycle by the motor 200 is realized. The direction of a power output route is denoted by arrows in FIG. 5.

In the fourth working mode, the electric bicycle is in a shutdown or coast state, the motor 200 is shut down and does not generate power, and the crankshaft 100 does not rotate, such that the rider is not forced to step on the cranks 110, thereby improving the riding experience and enhancing the riding safety.

Referring to FIG. 3 and FIG. 5, it can be understood that when the motor 200 outputs power and the rider is not pedaling, the first one-way clutch 300 can eliminate magnetic resistance or mechanical resistance generated by the crankshaft 100 on the transmission assembly 600 without causing an additional resistance to the motor 200, thereby avoiding insufficient power which is caused by the generated resistance. When the motor 200 stops operating, the second one-way clutch 400 can eliminate magnetic resistance or mechanical resistance generated by the motor 200 and the transmission assembly 600 on the crankshaft 100 without causing an additional resistance to the rider, thereby effectively solving the problem of high resistance on the motor200 during zero assistance.

It should be noted that in the first working mode, the electric bicycle is driven by human power alone without the intervention of the motor 200. In the third working mode, the electric bicycle is driven by the power outputted by the motor 200 alone without the intervention of human power. It can be understood that in the first working mode and the third working mode, the electric bicycle is driven by a single source of power, and there is no need to consider the issue of power assistance. In the fourth working mode, neither human power nor the motor 200 is involved, and there is no need for control of the motor 200. In the third working mode, i.e., the power assist mode, the electric bicycle is jointly driven by human power and the motor 200. Therefore, the embodiments of the present application relate to the power assist mode that needs to control the intervention and disengagement of the power of the motor 200, so as to make the power-assisted effect better.

Referring to FIG. 2, it can be understood that the power device 1000 of the embodiment of the present application includes a controller 800, a first sensor 700, and a second sensor 210. The first sensor 700 and the second sensor 210 are respectively electrically connected to the controller 800. The first sensor 700 is configured to detect a torque of the crankshaft 100. The first sensor 700 may be a torque sensor, which may be mounted between the crankshaft 100 and the power output part 500. The second sensor 210 is configured to detect a rotational speed of the motor 200. The second sensor 210 may be an angular velocity sensor, which is mounted on the motor 200 to detect angular velocity information of the drive shaft. The rotational speed of the motor 200 can be determined according to the angular velocity information. In this way, the rotational speed of the motor 200 can be accurately detected. Signals detected by the first sensor 700 and the second sensor 210 are transmitted to the controller 800, such that the controller 800 can acquire the torque of the crankshaft 100 and the rotational speed of the motor 200. The controller 800 is configured to control an output torque of the motor 200 according to the acquired torque and rotational speed signals.

It can be understood that in the power assist mode, the power device 1000 requires the crankshaft 100 and the motor 200 to jointly output power, and the controller 800 controls the output torque of the motor 200 according to the torque acquired by the first sensor 700 and the rotational speed acquired by the second sensor 210. For example, when a torque generated by human pedaling increases, the controller 800 may decrease the output torque of the motor 200 according to the current rotational speed of the motor 200. When the torque generated by human pedaling decreases, the controller 800 may increase the output torque of the motor 200 according to the current rotational speed of the motor 200. In this way, the output torque can be quickly adjusted at the time of intervention and disengagement of the power of the motor 200, such that the power of human pedaling and the power of the motor 200 can be controlled to achieve a better output effect, thereby effectively solving the problems of insufficient power, power delay, intervention impact, and disengagement impact at the time of intervention and disengagement of the power of the motor 200, and high motor resistance 200 during zero assistance.

It should be noted that in some embodiments, the controller 800 acquires a preset power assist ratio, and calculates a target torque of the motor 200 according to the power assist ratio and the torque acquired by the first sensor 700; and adjusts the output torque to the target torque according to the rotational speed acquired by the second sensor 210, such that the motor 200 outputs the target torque to cooperate with human power to drive the electric bicycle. It can be understood that the power assist ratio is a ratio of a torque of the motor 200 to the torque of the crankshaft 100. The power assist ratio is preset data, and the controller 800 may store the preset power assist ratio data, thereby allowing the user to select a corresponding power assist ratio according to an operation need of the user when using the electric bicycle.

For example, the electric bicycle includes an OFF gear position and a power assist gear position. If a current working gear position is the OFF gear position, the power device 1000 makes no response. If the current working gear position is the power assist gear position, a power assist ratio i corresponding to the power assist gear position is acquired, a torque T1 of the torque sensor is acquired, and a target torque T0 of the motor 200 is calculated as T0=T1×i. In this way, the target torque of the motor 200 can be obtained. The target torque may also be understood as a response torque of the motor 200. It can be understood that when the crankshaft 100 is rotated by human pedaling, the motor 200 operates synchronously. In this case, the rotational speed of the motor 200 is acquired, and the output torque of the motor 200 is controlled based on the rotational speed of the motor 200, to reach the target torque. In this way, the adjustment of the output torque of the motor 200 is realized with high response efficiency. The output torque of the motor 200 can be adjusted in a timely manner according to the change of the torque generated by human pedaling, thereby avoiding the problems of insufficient power and power delay caused by power intervention or disengagement of the motor 200, and greatly reducing the impact caused by the power intervention and disengagement of the motor 200.

Referring to FIG. 1, in some embodiments, the first one-way clutch 300 includes a first inner ring 310, a first clutch assembly (not shown), and a first outer ring 320. The first outer ring 320 is fixedly connected to the crankshaft 100. The first clutch assembly is located between the first inner ring 310 and the first outer ring 320. The first sensor 700 is a torque sensor including a torque sensing kit 710 and a torque detection member 720. The first inner ring 310 is connected to the power output part 500 by the torque sensing kit 710. The torque detection member 720 is fixedly connected to the housing 101, and is fixedly provided relative to the torque sensing kit 710. When the crankshaft 100 rotates forward, the first outer ring 320 and the first inner ring 310 are driven to rotate, to transmit power to the power output part 500. At the same time, the first inner ring 310 drives the torque sensing kit 710 to rotate, to cause the torque sensing kit 710 to rotate relative to the torque detection member 720, such that the torque detection member 720 can output a torque signal. It can be understood that the first one-way clutch 300 is arranged at a front end of the power output route, and when the crankshaft 100 rotates reversely, the crankshaft 100 does not need to drive many parts to rotate together, and the moment of inertia is small. In this case, only the first outer ring 320 rotates together with the crankshaft 100, and the first inner ring 310 and the torque sensing kit 710 may be in a stationary state.

Referring to FIG. 1, in some embodiments, the second one-way clutch 400 includes a second inner ring 410, a second clutch assembly 420, and a second outer ring 430. The second outer ring 430 is connected to the output end of the transmission assembly 600, the second inner ring 410 is connected to the power output part 500, and the second clutch assembly 420 is located between the second outer ring 430 and the second inner ring 410, such that unidirectional power transmission is realized between the transmission assembly 600 and the power output part 500. In the embodiment, the power output part 500 is configured as the second inner ring 410, an output shaft 609 of the gear reduction mechanism is configured as the second outer ring 430, such that there is no need to additionally provide an inner ring and an outer ring for the second one-way clutch 400, reducing the overall size of the transmission assembly 600.

It should be noted that the first clutch assembly and the second clutch assembly 420 may adopt a clutch structure in which a driving part and a driven part are automatically engaged and disengaged through a change in rotational speed or a change in rotational direction. When the driving part drives the driven part to rotate together, the clutch assembly is in an engaged state. When the driving part and the driven part are disengaged from each other and rotate at respective speeds, the clutch assembly is in a disengaged state. The forms of the first clutch assembly and the second clutch assembly 420 are not limited herein.

It should be noted that in the embodiment of the present application, a drive sprocket (not shown) is mounted at one end of the power output part 500, and the power output part 500 and the drive sprocket become part of an output assembly. The output assembly is arranged at an end of the crankshaft 100 away from the transmission assembly 600 and is rotatable about the crankshaft 100. The power output part 500 is arranged coaxially with the crankshaft 100. One end of the power output part 500 may be connected to the torque sensing kit 710 through a spline, and the other end of the power output part 500 may be connected to the drive sprocket through a spline.

Referring to FIG. 1, it can be understood that the transmission assembly 600 in the embodiment of the present application is a gear reduction mechanism. The gear reduction mechanism may be a two-stage reduction gear set or a three-stage reduction gear set according to different speed ratio requirements. Using a three-stage reduction gear set as an example, the three-stage reduction gear set includes an input shaft 601, an input gear 602, a first intermediate shaft 603, a primary driven gear 604, a secondary driving gear 605, a second intermediate shaft 606, a secondary driven gear 607, a tertiary driving gear 608, an output shaft 609, an output gear 610, and a plurality of bearing sets. The input shaft 601 is configured to rotate with a rotor assembly 220 of the motor 200 and is arranged in parallel with an axis of the crankshaft 100. The input gear 602 is arranged on the input shaft 601. The first intermediate shaft 603 is arranged in parallel with the axis of the crankshaft 100. The primary driven gear 604 is arranged on the first intermediate shaft 603, is configured to mesh with the input gear 602, and has a greater number of teeth than the input gear 602. The secondary driving gear 605 is arranged on the first intermediate shaft 603. The second intermediate shaft 606 is arranged in parallel with the axis of the crankshaft 100. The secondary driven gear 607 is arranged on the second intermediate shaft 606, is configured to mesh with the secondary driving gear 605, and has a greater number of teeth than the secondary driving gear 605. The tertiary driving gear 608 is arranged on the second intermediate shaft 606. The output shaft 609 is configured to rotate coaxially with the power output part 500. The output gear 610 is arranged on the output shaft 609, is configured to mesh with the tertiary driving gear 608, and has a greater number of teeth than the tertiary driving gear 608. The plurality of bearing sets support the input shaft 601, the first intermediate shaft 603, the second intermediate shaft 606, and the output shaft 609 in such a way that the input shaft 601, the first intermediate shaft 603, the second intermediate shaft 606, and the output shaft 609 are rotatable about axes of the plurality of bearing sets, respectively.

FIG. 6 to FIG. 8 show a control method for a power device 1000 according to an embodiment of the present application. The control method is applicable to the power device 1000 according to the above embodiments. The structure of the power device 1000 is as described in the above embodiments, so the details will not be repeated herein. The control method will be described below through examples.

Referring to FIG. 6, in some embodiments, the control method includes, but not limited to, a following step.

In a step of S100, when the power device 1000 is in a power assist mode, an output torque of the motor 200 is controlled according to signals detected by the torque sensor and the angular velocity sensor.

Referring to FIG. 4, it should be noted that the control method according to the embodiment of the present application is described with respect to the power assist mode. In the power assist mode, both human power and the motor 200 are required for joint power output, and a quicker response needs to be made to the intervention and disengagement of the motor 200 to achieve a better power assist effect. Therefore, in the embodiment, the torque signal of the crankshaft 100 is detected by the torque sensor, and the rotational speed signal of the motor 200 is detected by the angular velocity sensor, and the output torque of the motor 200 is controlled in response to the acquired torque signal and rotational speed signal. It can be understood that the greater the pedaling force of the rider, the greater the torque generated by human power, and the smaller the power that the motor 200 needs to output for assistance, in which case the output torque of the motor 200 may be reduced. Similarly, the smaller the pedaling force of the rider, the greater the power that the motor 200 needs to output for assistance, in which case the output torque of the motor 200 may be increased to provide an effective power assist effect. When the speed is constant, the greater the output torque, the greater the power.

It can be understood that by acquiring the torque of the crankshaft 100, determining a current output state of human power, and then controlling and adjusting the output torque of the motor 200 according to the current rotational speed of the motor 200, the output torque can be quickly adjusted at the time of intervention and disengagement of the power of the motor 200, such that the power of human pedaling and the power of the motor 200 can be controlled to achieve a better output effect.

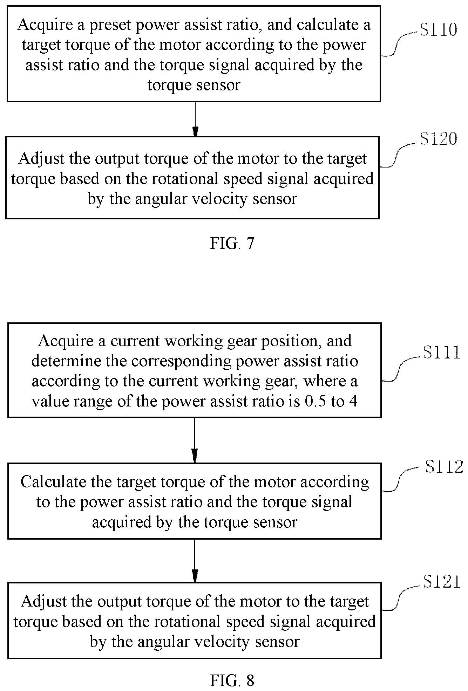

Referring to FIG. 7, in some embodiments, the control method includes, but not limited to, the following steps.

In a step of S110, a preset power assist ratio is acquired, and a target torque of the motor 200 is calculated according to the power assist ratio and the torque signal acquired by the torque sensor.

In a step of S120, the output torque of the motor 200 is adjusted to the target torque based on the rotational speed signal acquired by the angular velocity sensor.

It should be noted that the power assist ratio is a ratio of a torque of the motor 200 to the torque of the crankshaft 100, the power assist ratio is preset data, and the power assist ratio data may be stored in a memory of the controller 800. A corresponding power assist ratio is selected according to an operation need of the user using the electric bicycle, and the target torque is calculated according to the selected power assist ratio.

For example, the electric bicycle includes an OFF gear position and a power assist gear position. If a current working gear position is the OFF gear position, the power device 1000 makes no response. If the current working gear position is the power assist gear position, a power assist ratio i corresponding to the power assist gear position is acquired, a torque T1 of the torque sensor is acquired, and a target torque T0 of the motor 200 is calculated as T0=T1×i. In this way, the target torque of the motor 200 can be obtained. The target torque may also be understood as a response torque of the motor 200. For example, when the torque acquired by the torque sensor is 60 N•m and it is determined according to the stored power assist ratio information that the power assist ratio corresponding to the current power assist gear position is 1, the target torque of the motor 200 is calculated as 1×60=60 N•m. Then, the output torque of the motor 200 is adjusted based on the current rotational speed of the motor 200. Because the output torque of the motor 200 is related to the rotational speed and power, the output torque of the motor 200 can be adjusted to the target torque when the rotational speed of the motor 200 is known. In this way, high response efficiency is achieved. The output torque of the motor 200 can be adjusted in a timely manner according to the change of the torque generated by human pedaling, thereby avoiding the problems of insufficient power and power delay caused by the power intervention or disengagement of the motor 200, and greatly reducing the impact caused by the power intervention and disengagement of the motor 200.

Referring to FIG. 8, in some embodiments, the control method includes, but not limited to, the following steps.

In a step of S111, a current working gear position is acquired, and the corresponding power assist ratio is determined according to the current working gear, where a value range of the power assist ratio is 0.5 to 4.

In a step of S112, the target torque of the motor 200 is calculated according to the power assist ratio and the torque signal acquired by the torque sensor.

In a step of S121, the output torque of the motor 200 is adjusted to the target torque based on the rotational speed signal acquired by the angular velocity sensor.

It should be noted that in the embodiment of the present application, the power assist mode includes a plurality of preset working gear positions each corresponding to a different power assist ratio. In a preferred embodiment, there are six working gear positions: gear position OFF, gear position 1, gear position 2, gear position 3, gear position 4, and gear position 5, respectively corresponding to power assist ratios i of 0, 1, 1.7, 2.6, 3, and 4. It can be understood that the torque provided by the motor 200 in the gear position OFF is 0, so the power assist ratio i corresponding to the gear position OFF is 0. It can be understood that in the power assist mode, when the user selects different working gear positions, the corresponding power assist ratio is acquired according to the selected working gear position, then the target torque of the motor 200 is calculated according to the power assist ratio and the acquired torque signal, and the output torque of the motor 200 is controlled based on the rotational speed of the motor 200, so as to reach the target torque. As such, the output torque of the motor 200 can be adjusted according to the change in the power of human pedaling. In this way, the output torque can be quickly adjusted at the time of intervention and disengagement of the power of the motor 200, such that the power of human pedaling and the power of the motor 200 can be controlled to achieve a better output effect, thereby effectively solving the problems of insufficient power, power delay, intervention impact, and disengagement impact at the time of intervention and disengagement of the power of the motor 200, and high motor resistance 200 during zero assistance.

Referring to FIG. 3 to FIG. 5, it should be noted that the power device 1000 of the embodiment of the present application has four working modes, including a human-powered mode, a motor-powered mode, the power assist mode, and a shutdown or coast mode. The human-powered mode is the first working mode in the above embodiments, the power assist mode is the second working mode in the above embodiments, the motor-powered mode is the third working mode in the above embodiments, and the shutdown or coast mode is the fourth working mode in the above embodiments. It can be understood that during the use of the electric bicycle, an operation instruction of the user is acquired, and the working mode is switched according to the operation instruction of the user. As such, the electric bicycle can be freely switched between different working modes.

For example, when the electric bicycle is in a stopped state, the electric bicycle is in the shutdown mode. When the user selects a working gear position other than the gear position OFF, the user steps on the cranks 110, the first one-way clutch 300 is changed from a shutdown state to a working state, the torque sensor sends a detected torque signal to the controller 800, and the controller 800 controls an output torque of the motor 200 based on an acquired rotational speed signal of the motor 200. In this case, the motor 200 rotates forward, and the power of the motor 200 is transmitted to the second one-way clutch 400, and the second one-way clutch 400 is changed from a shutdown state to a working state. As such, the switching from the shutdown mode to the power assist mode is realized. For switching between other working modes, reference may be made to the above embodiments, so the details will not be repeated herein.

An embodiment of the present application provides a control device, including: a memory, a processor, and a computer program stored in the memory and executable by the processor. The processor and the memory may be connected by a bus or in other ways.

The memory, as a non-transitory computer-readable storage medium, may be configured for storing a non-transitory software program and a non-transitory computer-executable program. In addition, the memory may include a high-speed random access memory, and may also include a non-transitory memory, e.g., at least one magnetic disk storage device, flash memory device, or other non-transitory solid-state storage device. In some implementations, the memory may include memories located remotely from the processor, and the remote memories may be connected to the processor via a network. Examples of the network include, but not limited to, the Internet, an intranet, a local area network, a mobile communication network, and combinations thereof.

The non-transitory software program and instructions required to implement the control method of the foregoing embodiments are stored in the memory which, when executed by the processor, cause the processor to implement the control method of the foregoing embodiments, for example, implement the method step S 100 in FIG. 6, the method steps S110 to S 120 in FIG. 7, or the method steps S111 to S 121 in FIG. 8.

The apparatus embodiments described above are merely examples. The units described as separate components may or may not be physically separated, i.e., they may be located in one place or may be distributed over a plurality of network units. Some or all of the modules may be selected according to actual needs to achieve the objects of the scheme of this embodiment.

In addition, an embodiment of the present application provides an electric bicycle, including the power device 1000 or the control device of the above embodiments. Because the electric bicycle adopts all the technical schemes of the power device 1000 or the control device of the above embodiments, the electric bicycle has at least all the beneficial effects achieved by the technical schemes of the above embodiments.

In addition, an embodiment of the present application provides a computer-readable storage medium, storing a computer-executable instruction which, when executed by a processor or controller, for example, by a processor in the electric bicycle embodiment described above, may cause the processor to implement the control method of the foregoing embodiments, for example, implement the method step S 100 in FIG. 6, the method steps S110 to S 120 in FIG. 7, or the method steps S111 to S 121 in FIG. 8.

Those having ordinary skills in the art can understand that all or some of the steps in the methods disclosed above and the functional modules/units in the system and the apparatus can be implemented as software, firmware, hardware, and appropriate combinations thereof. Some or all physical components may be implemented as software executed by a processor, such as a central processing unit, a digital signal processor, or a microprocessor, or as hardware, or as an integrated circuit, such as an application-specific integrated circuit. Such software may be distributed on a computer-readable medium, which may include a computer storage medium (or non-transitory medium) and a communication medium (or transitory medium). As is known to those having ordinary skills in the art, the term "computer storage medium" includes volatile and nonvolatile, removable and non-removable media implemented in any method or technology for storage of information (such as computer-readable instructions, data structures, program modules, or other data). The computer storage medium includes, but not limited to, a Random Access Memory (RAM), a Read-Only Memory (ROM), an Electrically Erasable Programmable Read-Only Memory (EEPROM), a flash memory or other memory technology, a Compact Disc Read-Only Memory (CD-ROM), a Digital Versatile Disc (DVD) or other optical storage, a cassette, a magnetic tape, a magnetic disk storage or other magnetic storage device, or any other medium which can be used to store the desired information and can be accessed by a computer. In addition, as is known to those having ordinary skills in the art, the communication medium typically includes computer-readable instructions, data structures, program modules, or other data in a modulated data signal such as a carrier or other transport mechanism, and can include any information delivery medium. The embodiments of the present application have been described in detail above with reference to the accompanying drawings, but the present application is not limited to the above embodiments, and various changes may be made within the knowledge of those having ordinary skills in the art without departing from the protection scope of the present application.

## Claims

1. A power device, comprising:
a crankshaft;
a motor;
a first one-way clutch;
a second one-way clutch;
a power output part, connected to the crankshaft by the first one-way clutch;
a transmission assembly, wherein an input end of the transmission assembly is connected to a drive shaft of the motor, and an output end of the transmission assembly is connected to the power output part by the second one-way clutch;
a first sensor, configured to detect a torque of the crankshaft;
a second sensor, configured to detect a rotational speed of the motor; and
a controller, configured to control an output torque of the motor according to signals detected by the first sensor and the second sensor.

2. The power device of claim 1, wherein the controller is configured to: acquire a preset power assist ratio, and calculate a target torque of the motor according to the power assist ratio and the torque acquired by the first sensor; and adjust the output torque to the target torque according to the rotational speed acquired by the second sensor, where the power assist ratio is a ratio of a torque of the motor to the torque of the crankshaft.

3. The power device of claim 1 or 2, wherein the first one-way clutch comprises a first inner ring, a first clutch assembly, and a first outer ring, the first outer ring is fixedly connected to the crankshaft, the first clutch assembly is located between the first inner ring and the first outer ring, the first sensor comprises a torque sensing kit and a torque detection member, the first inner ring is connected to the power output part by the torque sensing kit, and the torque detection member is fixedly provided.

4. The power device of any one of claims 1 to 3, wherein the second one-way clutch comprises a second inner ring, a second clutch assembly and a second outer ring, the second outer ring is connected to the output end, the second inner ring is connected to the power output part, and the second clutch assembly is located between the second outer ring and the second inner ring.

5. The power device of any one of claims 1 to 4, wherein the second sensor is an angular velocity sensor configured to detect the rotational speed of the motor.

6. The power device of any one of claims 1 to 5, wherein the transmission assembly is a two-stage reduction gear set or a three-stage reduction gear set.

7. A control method for a power device, wherein the power device comprises a crankshaft, a motor, a first one-way clutch, a second one-way clutch, a power output part, a transmission assembly, a first sensor, and a second sensor; the power output part is connected to the crankshaft by the first one-way clutch; an input end of the transmission assembly is connected to a drive shaft of the motor, and an output end of the transmission assembly is connected to the power output part by the second one-way clutch; the first sensor is configured to detect a torque of the crankshaft; the second sensor is configured to detect a rotational speed of the motor;
the control method comprising:
controlling an output torque of the motor according to signals detected by the first sensor and the second sensor in response to the power device being in a power assist mode.

8. The control method for a power device of claim 7, wherein controlling an output torque of the motor according to signals detected by the first sensor and the second sensor comprises:
acquiring a preset power assist ratio, and calculating a target torque of the motor according to the power assist ratio and a torque signal acquired by the first sensor, the power assist ratio is a ratio of a torque of the motor to the torque of the crankshaft; and
adjusting the output torque of the motor to the target torque based on a rotational speed signal acquired by the second sensor.

9. The control method for a power device of claim 8, wherein the power assist mode comprises a plurality of working gear positions which are preset, each of the working gear positions corresponds to a different power assist ratio, and acquiring a preset power assist ratio comprises:
acquiring a current working gear position, and determining the corresponding power assist ratio according to the current working gear, wherein a value range of the power assist ratio is 0.5 to 4.

10. The control method for a power device of any one of claims 7 to 9, comprising:
acquiring an operation instruction of a user; and
switching a working mode of the power device according to the operation instruction, wherein the working mode comprises a human-powered mode, a motor-powered mode, the power assist mode, and a shutdown or coast mode.

11. A control device, comprising a memory, a processor, and a program stored in the memory and executable by the processor, wherein the program, when executed by the processor, causes the processor to perform the control method of any one of claims 7 to 10.

12. An electric bicycle, comprising the power device of any one of claims 1 to 6 or the control device of claim 11.
